(19) Europäisches Patentamt
European Patent Office
Office européen des brevets

(11) **EP 2 749 132 B1**

(12) **EUROPEAN PATENT SPECIFICATION**

(45) Date of publication and mention
of the grant of the patent:
**28.08.2019 Bulletin 2019/35**

(51) Int Cl.:
***H05B 33/08*** (2006.01)

(21) Application number: **12806690.9**

(86) International application number:
**PCT/IB2012/056639**

(22) Date of filing: **22.11.2012**

(87) International publication number:
**WO 2013/076685 (30.05.2013 Gazette 2013/22)**

(54) **LED DRIVER CIRCUIT, DRIVING METHOD AND VEHICLE LIGHT**

LED TREIBERSCHALTUNG, ANSTEUERUNGSVERFAHREN UND FAHRZEUGLEUCHTE

CIRCUIT PILOTE DE DEL, PROCÉDÉ DE COMMANDE ET FEU DE VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.11.2011 IT PD20110371**

(43) Date of publication of application:
**02.07.2014 Bulletin 2014/27**

(73) Proprietor: **Automotive Lighting Italia S.p.A. A Socio Unico**
**10078 Venaria Reale, (TO) (IT)**

(72) Inventors:
• **BACCARIN, Davide**
**I-10078 Venaria Reale (TO) (IT)**
• **ENGLARO, Andrea**
**I-10078 Venaria Reale (TO) (IT)**
• **MARCORI, Franco**
**I-10078 Venaria Reale (TO) (IT)**

(74) Representative: **Chimini, Francesco**
**Jacobacci & Partners S.p.A.**
**Piazza Mario Saggin, 2**
**35131 Padova (IT)**

(56) References cited:
**EP-A2- 1 096 834      US-A1- 2011 068 700**
**US-A1- 2011 121 740**

**Description**

The present invention relates to an LED driver circuit, in particular for a vehicle light. More specifically, the present invention relates to, a driver circuit of at least two LED strings, connected in parallel to each other, each composed of one or more LEDs connected to each other.

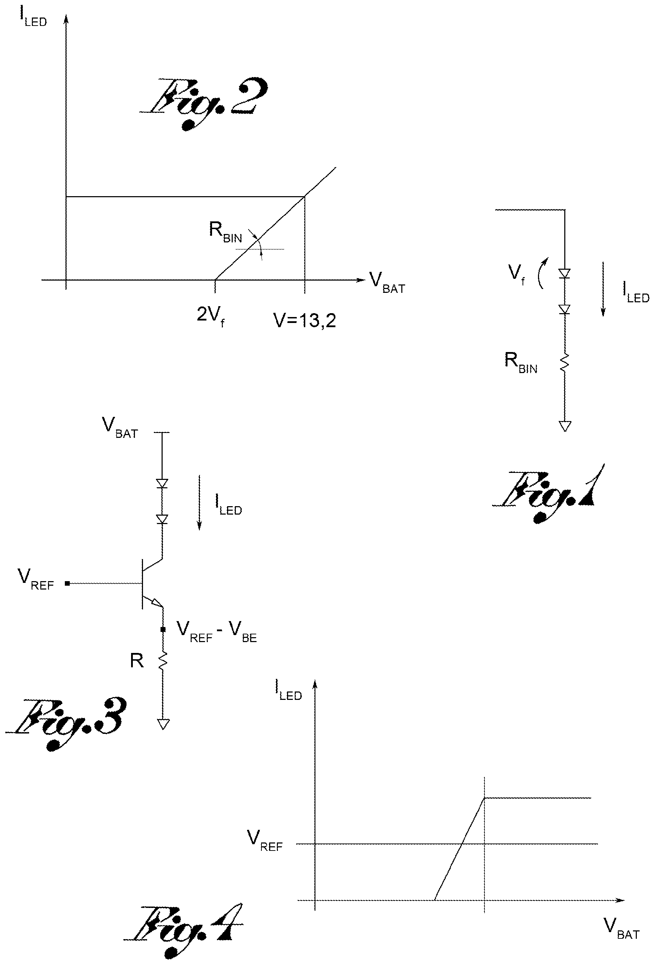

A driving method of such LED strings, shown in figures 1 and 2, envisages the use of only resistive elements in series to each LED string to determine the driver current of the LEDs, which in turn determine the light intensity of the LEDs. In this driving method, when the power supply voltage exceeds the sum of the activation voltages of the LEDs of each string, and the LEDs therefore begin to conduct current, the direction of the current crossing the LEDs has an almost linear behaviour, that is depending in a linear manner on the power supply voltage at the ends of the string. The slope of the curve which relates the LED driver current to the power supply voltage is given by the reciprocal of the resistance value in series to the LED (1/RBIN). During the circuit design phase, for example in the case of driving the LEDs of a vehicle light, the circuit is scaled so as to be able to dissipate a power over that of the nominal value of the power supply voltage. For example, even if the nominal voltage supply provided by the power supply system of a vehicle, comprising for example a battery and an alternator, is of 13.2 V, the power supply voltage supplied by the power supply system may be significantly greater, even 17 V, so that the circuit is scaled for a power supply voltage for example of 18 V. Consequently, if the optimal functioning of the circuit is for a voltage of 13.2 V, above such value there is a supplementary dissipation of power in the form of heat which exceeds the nominal effective power of a percentage value which goes beyond 15%. To overcome such drawback, certain driver circuits are designed to power the LED string, when the value of the power supply voltage exceeds the nominal value, with a pulse width modulation (PWM) of the power supply voltage signal. This way, at the cost of a slight drop in luminosity (to the order for example of 6-8%), the percentage variation between the effective power and nominal effective power absorbed by the circuit remains limited to within the acceptable value of 15%.

There is however another problem in this type of driver circuit. The LEDs in fact have an activation voltage which may vary considerably, for example from 2.7 to 3.7 V. With the varying of such activation voltage the curve relating the driver current to the power supply voltage translates. For the same power supply voltage, the current absorbed by two or more LED strings may vary considerably, even by 30-40%, the resistances in series to the LEDs being equal to each other, and this is reflected in a difference in the light intensity generated by the LED strings. In the case in question of LED drivers for vehicle lights, there may for example be a different luminous intensity between one light and another.

To overcome this drawback, LEDS with voltage selection are chosen, that is to say LEDs classified for specific activation voltage bands. This way, by using LEDs in the same activation voltage band, the difference in absorbed current and therefore luminosity is limited to an acceptable value.

Another driving method of the LED strings, making it possible to completely overcome the drawback of different activation voltages of the LEDs, envisages use of a stabilised current circuit (figures 3 and 4). In a typical embodiment, the driver current of the LEDs is controlled by a power transistor connected in series to the LEDs of each LED string. Such power transistor is made to work in the linear zone by applying a suitable reference voltage Vref constantly to its base. Consequently, the driver current of each LED string is the collector current which, if the transistor works in the linear zone, is given by the ratio of the voltage on the emitter, which is fixed being equal to the difference between the reference voltage Vref and the voltage drop between the base and emitter, and the resistance in series to the transistor, which is equal for each LED string. They no longer depend on the characteristics of the LED, but solely on the reference voltage, which is fixed and constant for all the transistors, the driver currents of the LEDs all being equal.

However, even this circuit has a drawback. Given that the current remains constant even with an increase in the power supply voltage, it is no longer possible to apply the PWM modulation since this would cause an unacceptable or in any case clearly perceptible drop in luminosity. This brings about an elevated dissipation of power in the form of heat and therefore the need to dispose of such heat by increasing the area occupied by the circuit or using suitable cooling systems. US2011068700A1 discloses methods of driving multiple LED devices in which the regulation of the LED current is accomplished by switching operation to compensate the difference of the LED operating voltage.

The object of the present invention is to propose an LED driver circuit, in particular for vehicle lights, able to overcome the drawbacks complained of above with reference to the prior art.

Said object is achieved by a circuit according to claim 1, with a driving method according to claim 11, and with a vehicle light according to claim 15. The dependent claims describe preferred embodiments of the invention.

According to claim 1, an LED driver circuit for powering at least one LED string comprising one or more LEDs connected in series to each other is proposed. The circuit comprises a positive power supply terminal suitable for connecting to the positive pole of a direct voltage power supply generator and a negative terminal suitable for connecting to the negative pole of said generator, the LED string being connected between said power supply terminals. The circuit further comprises at least one lighting switching element, connected to the LED string and operable to switch at least between an inactive state, in which it prevents the passage of a driver current into said LED string, and an active state, in which it imposes a driver current through said LED string, said driver current being dependent on a driver voltage applied to the lighting switching element. The circuit further comprises switch driver circuit means connected to the positive power supply terminal and suitable for generating a driver voltage which depends in a substantially linear manner on the power supply voltage present on the positive power supply terminal.

In a preferred embodiment, the LED driver circuit is suitable for powering at least one LED string, each LED string comprising one or more LEDs connected to each other in series. The circuit comprises a positive power supply terminal suitable for connecting to the positive pole of a direct voltage power supply generator and a negative terminal suitable for connecting to the negative pole of said generator, the LED strings being connected in parallel between said power supply terminals. The circuit further comprises a plurality of lighting switching elements, each connected to a respective LED string and operable to switch at least between an inactive state, in which it prevents the passage of a driver current into said LED string, and an active state, in which it imposes a driver current through said LED string, The driver current is dependent on a driver voltage applied to the lighting switching element. The circuit further comprises switch driver circuit means connected to the positive power supply terminal and suitable for generating a driver voltage which depends in a substantially linear manner on the power supply voltage present on the positive power supply terminal.

In a preferred embodiment, each lighting switching element consists of a lighting transistor having its collector and emitter terminals connected to the LED string, the driver voltage being applied to the base terminal of said transistor.

In a preferred embodiment, the lighting transistor switches to the active state when the transistor driver voltage assumes a value such as to make said transistor work in the linear zone, by-passing the saturation zone.

Having defined Vref = Vx + kVDD as the curve which relates the driver voltage to the voltage on the positive power supply terminal, said switch driver circuit means comprise a slope regulation circuit suitable for defining the slope (k) of said curve and a curve origin set up circuit suitable for defining the origin (Vx) of said curve.

In a preferred embodiment, the switch driver circuit means comprise a transistor control circuit suitable to force the driver transistors to work in the linear zone.

The characteristics and advantages of the driver circuit and method according to the invention will, in any case, be evident from the description given below of its preferred embodiments, made by way of non-limiting examples with reference to the appended drawings, wherein:

- Figure 1 shows an example of a driver circuit according to the prior art;
- Figure 2 shows the characteristic which relates the driver current of the LEDs to the power supply voltage of the driver circuit in figure 1;
- Figure 3 shows a second example of a driver circuit according to the prior art;
- Figure 4 shows the characteristic which relates the driver current of the LEDs to the power supply voltage of the driver circuit in figure 3;
- Figure 5 shows a circuit diagram of the driver circuit according to the invention;
- Figure 6 is a diagram showing the characteristic curve relating the driver current of the LEDs to the power supply voltage in the circuit according to the invention;
- Figure 7 is a circuit diagram relative to the transistor control circuit, for a lighting transistor;
- Figure 8 is a diagram which shows, depending on the power supply voltage, the power absorption of a lighting branch in the driver circuits according to the prior art, as in Figures 1 and 3, and in the circuit according to the invention; and
- Figure 9 is an example of a vehicle light the LEDs of which are driven by a driver circuit according to the invention.

In the description below, the term "connected" refers both to a direct electrical connection between two circuit elements and to an indirect connection via one or more intermediate active or passive elements. The term "circuit" may indicate either a single component or plurality of components, active and/or passive, connected to each other to obtain a pre-defined function. Moreover, where a bipolar junction transistor (BJT) or field effect transistor (FET) can be used, the meaning of the terms "base", "collector", "emitter" comprise the terms "gate", "drain" and "source" and vice versa. Unless indicated otherwise, lastly, NPN transistors may be used in place of PNP transistors, and vice versa.

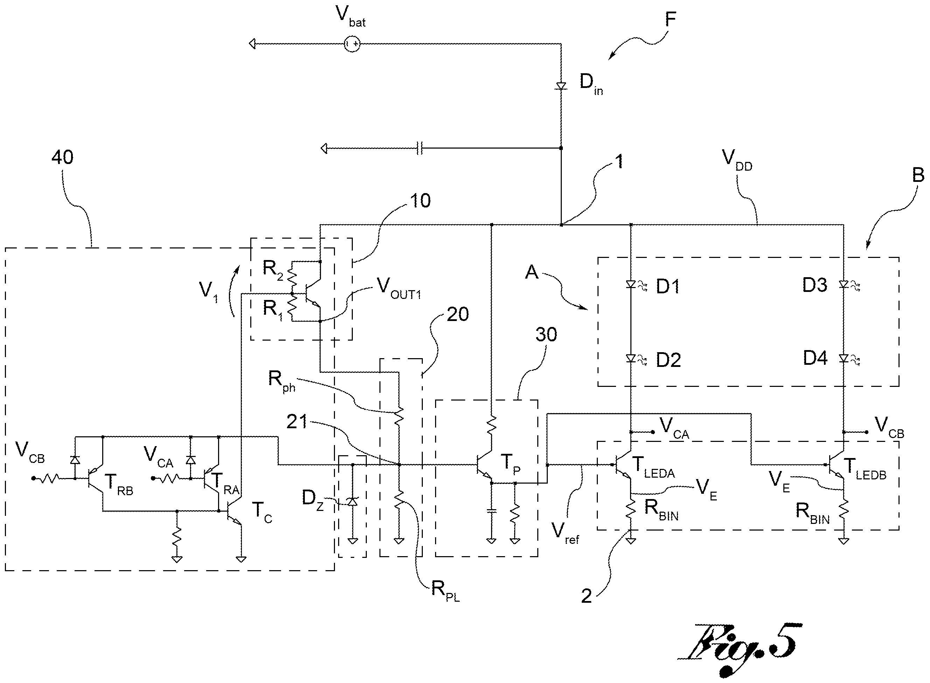

The LED driver circuit according to the invention, globally denoted by reference numeral 100, will now be described with reference to the circuit diagram in figure 5. In the example shown, said driver circuit is suitable for driving two LED strings D1-D4, each comprising two LEDs D1, D2, D3, D4. The circuit is suitable for being connected to a direct voltage power supply generator Vbat, such as a power supply system of a vehicle comprising a battery and an alternator. The driver circuit therefore has a positive power supply terminal 1, suitable for connecting to the positive pole of the voltage generator, and a negative terminal 2, suitable for connecting to the negative pole of the voltage generator, for example the earth.

An input filter F further comprising an anti-inversion diode Din may be positioned between the voltage generator Vbat and the power supply terminals 1,2 of the driver circuit.

The LED strings are placed on respective lighting circuit branches A, B connected in parallel between said positive and negative terminals of the driver circuit.

A lighting transistor TLEDA; TLEDB is connected to each LED string. For example, said lighting transistor has the collector connected to the LED string and the emitter connected to the earth via a driver resistance RBIN. The state of the lighting transistors TLEDA;TLEDB, and therefore of the passage of current through the LED strings, is determined by the voltage value Vref on the basis of the transistors, hereinafter referred to as driver voltage Vref. As will be described, said driver voltage value Vref is defined by the driver circuit means connected to the power supply terminals 1,2 of the circuit and suitable for rendering said driver voltage dependent in a substantially linear manner on the power supply voltage VDD at the ends of said power supply terminal.

More specifically, it follows that the emitter voltage of the lighting transistors will therefore assume the same substantially linear pattern. Consequently, the emitter current, and therefore the driver current of the LEDs also, the transistors being in the linear zone, will also depend in a substantially linear manner on the power supply voltage VDD.

In the continuation of the description, the power supply voltage VDD of the driver circuit will be defined as the voltage at the ends of the power supply terminals 1,2 .

In particular, the characteristic curve relating the driver voltage Vref to the power supply voltage VDD is broken, comprising a first curve r1 of the type:

$$Vref = VDD-VLEDON-VDO,$$

for (VLEDON+VDO)≤VDD≤V12
and a second curve r2 of the type

$$Vref = Vx + kVDD,$$

for VDD>V12
where

VLEDON is a constant voltage value indicating the highest of the voltage drops at the ends of the LED strings causing the LEDs to turn on;
VDO is a constant voltage value which takes into account the voltage drops at the junctions introduced by the type of circuit;
Vx and K are respectively the origin and slope of the second curve, the values of which will be calculated below; and
V12 is the power supply voltage at which the transition between the first and the second curve occurs.

The second curve r2 represents the linear characteristic which relates the driver voltage Vref to the power supply voltage VDD in the case in which the lighting transistors always work in the linear zone.

Since, in actual fact, as will be explained further below, the lighting transistors, when activated, tend to pass from the saturation point before entering the linear zone, and the driver current of the LEDs being dependent on the characteristics of the LEDs when the lightning transistors are in saturation, a special transistor control circuit is provided, which forces the lighting transistors to always work in the linear zone even when they would tend to go into saturation. In the power supply voltage VDD range in which said control circuit is active, the characteristic Vref (VDD) is constituted by the first curve r1.

Consequently, in the absence of such transistor control circuit, the driver voltage Vref would depend in a substantially linear manner on the power supply voltage VDD with a direction given by the second curve r2, but only starting from a power supply voltage value VDD such as to make the lighting transistors work in the linear zone.

Now the driver circuit means which define the origin and the slope of the second curve r2 will be described first.

Starting from the positive power supply terminal 1, an origin set up circuit 10 suitable for defining the origin Vx of the second curve Vref = Vx + kVDD is connected to said positive power supply terminal, in parallel with the lightning branches A, B. Said origin set up circuit 10 defines at its ends a pre-defined voltage drop V1. Consequently, downstream of said origin set up circuit 10 one has a first output voltage Vout1 less than VDD.

In one embodiment, said origin set up circuit 10 is a transistor circuit having a resistance R1 between base and emitter and a resistance R2 between base and collector. In this case, it is possible to approximate the voltage drop V1 (coinciding with the collector-emitter voltage VCE) with: V1 = VBE*(1+R2/R1), where VBE is the base-emitter voltage and has a substantially constant value, equal to about 0.7 V. It is to be noted that, such voltage drop at the ends of the origin set up circuit 10 refers to the working condition on the second curve r2; in the working condition on the first curve r1, the V1 value will be modified as described below.

Downstream of said origin set up circuit 10 and in series with it, a slope regulation circuit 20 suitable for defining the slope k of the second curve Vref=Vx + kVDD is connected. In a preferred embodiment, said slope regulation circuit 20 is a voltage divider having one higher resistance Rph and one lower resistance Rpl. The Vout2 voltage on the output terminal 21 of said voltage divider is therefore:

$$Vout2=(VDD-V1)*Rpl/(Rph+Rpl),$$

when VDD>V1.
Vout2=0 when VDD<V1.

As will be explained further below, said voltage Vout2 in output at the voltage divider is a good approximation (that is to say except for the voltage drop on the power driver which will be defined below) of the driver voltage Vref present on the base of the lighting transistors.

It is to be noted that, the origin set up circuit 10 may also be placed downstream of the slope regulation circuit 20. In this embodiment variation, a curve passing through the origin may be obtained which offers however lower performance in the case of PWM modulation of the power supply voltage.

In a preferred embodiment, a power driver 30 is placed between the output terminal 21 of the slope regulation circuit 20 and the base of the lighting transistors. Said power driver 30 is suitable for supply the lighting transistors with the base current needed to permit their functioning in the linear zone.

In the case shown wherein the power driver 30 comprises a power transistor TP in a shared collector configuration, the base of the lighting transistors is connected to the emitter of said power transistor TP. Consequently, the driver voltage Vref applied to the base of the lighting transistor is equal to the difference between the output voltage of the voltage divider (Vout2) and the voltage drop VBE between the base and emitter of the power transistor. So:

$$Vref=Vout2-VBE=(VDD-V1)*Rpl/(Rph+Rpl)-VBE=$$

$$=VDD*Rpl/(Rpl+Rph)-V1*Rpl/(Rpl+Rph)-VBE$$

Consequently, with reference to the aforementioned characteristic Vref/VDD, one has:

$$Vx = - V1*Rpl/(Rpl+Rph)-VBE$$

$$K = Rpl/(Rpl+Rph)$$

Where V1, Rpl e Rph are constant predefined parameters.

Given that the lighting transistors TLED operate in the linear zone on the second curve r2, the driver voltage Vref being known, it is possible to obtain the value of the driver current ILED, which is equal to the ratio of the voltage VE on the emitter of the lighting transistors and the driver resistance RBIN:

$$ILED=(Vref-VBE)/RBIN$$

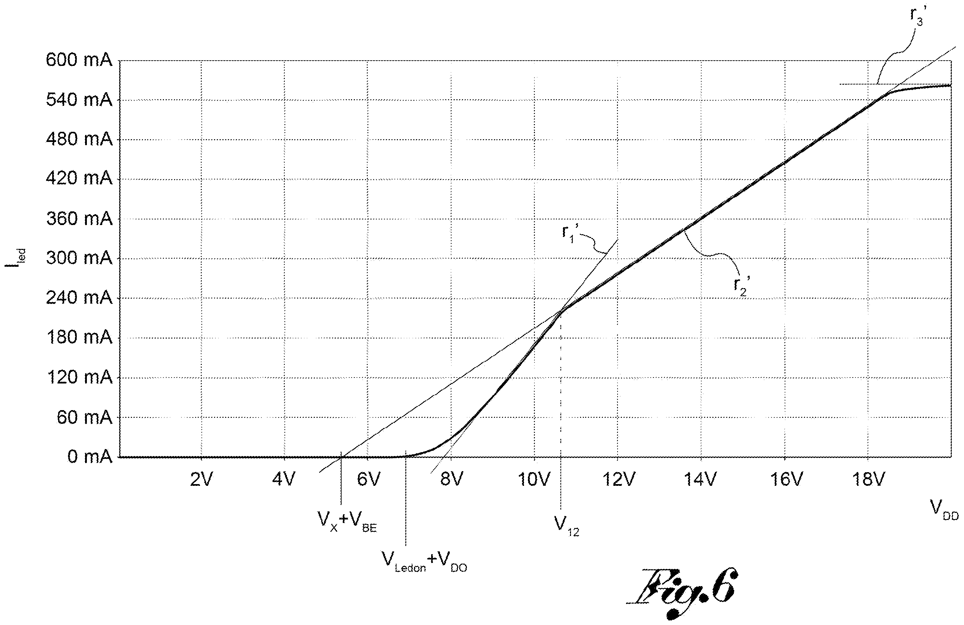

(second curve r2' in figure 6).

As can be seen, the value of the driver current depends in a linear manner on the power supply voltage VDD and is completely independent of the characteristics of the LEDs, in particular of their activation voltage VF.

Consequently, the driver circuit means comprising the origin set up circuit 10 and the slope regulation circuit 20 make it possible to resolve the problem of making the driver voltage dependent in a linear manner on the power supply voltage VDD and completely independent of the LED characteristics, starting from a certain power supply voltage VDD.

As said, such dependency of the ILED driver current solely on the power supply voltage VDD occurs when the lighting transistors work in the linear zone. However, the power supply voltage VDD may fluctuate, and in any case during the transition from zero to the nominal value, such that they would make the lighting transistors work in the saturation zone if the driver means comprised only the origin set up circuit 10 and the slope regulation circuit 20.

However, if the lighting transistors worked in saturation, the driver current, while still being dependent in a substantially linear manner on the power supply voltage VDD, would no longer depend on the driver voltage Vref, but on the voltage/current characteristics of the LEDs. In such circumstance, in a preferred embodiment of the driver circuit, when the power supply voltage VDD exceeds the voltage Vx + VBE a current begins to flow across the base of the lighting transistors. Since the power supply voltage VDD is not yet such as to turn on the LEDs and the ILED driver current is therefore null, the lighting transistors work in far saturation and the current flowing in the driver resistance is all that coming from the base of the lighting transistors.

When the power supply voltage VDD is such as to turn on the LEDs of a lighting branch, a driver current ILED begins to flow through the LEDs, but initially such current is not yet such as to send the lighting transistors into the linear zone.

From the moment that the LEDs begin to conduct, the current on them increases with a characteristic depending on the voltage/current characteristics of the LEDs, as well as on the reciprocal of the driver resistance RBIN.

In other words, before being able to work in the linear zone, the lighting transistors work in the saturation zone (again in the condition in which the driver means comprise solely the origin set up circuit 10 and the slope regulation circuit 20).

When the power supply voltage VDD increases further until it reaches a value, in relation to the driver voltage Vref, such as to send the lighting transistors into the linear zone, the characteristic ILED(VDD) intersects the second curve of the current r2' and the driver current ILED depends on the power supply voltage VDD according to the characteristic of such second curve r2'.

As said, when the lighting transistors work in saturation, the ILED driver current depends on the LED characteristics. Consequently, if the characteristic voltage/current of one lighting branch is different from that of another lighting branch, non-coinciding ILED (VDD) values occur. In particular, the ILED (VDD) relative to the lighting branch with the higher LED activation voltages intersects the axis of the x-axis further forward than the other characteristics, in other words to the right of the other characteristics. In this situation the lighting branches are of varying luminosity.

A further drawback of making the lighting transistors work in saturation consists of the fact that, most of the current flowing in the driver resistance being given by the current flowing in the transistor base, and such current also being able to reach a considerable value, there is the risk that the lighting transistors and/or power driver controlling them could be damaged.

As mentioned above, according to a further aspect of the invention, the driver circuit comprises a transistor control circuit 40 suitable for forcing the lighting transistors to always work in the linear zone, obviously when switching to an activation state. In other words, said control circuit forces the lighting transistors to switch from the inactive state to the active state in the linear zone without passing through the saturation zone.

In one embodiment, said transistor control circuit 40 is connected in feedback between the collector terminal of each of the lighting transistors TLEDA; TLEDB and the origin set up circuit 10, in such a way that when the voltage on said collector terminal assumes a value corresponding or tending to a state of saturation of the transistor, the control circuit 40 acts on said origin set up circuit 10 increasing the voltage drop V1 at its ends. By increasing the voltage drop at the ends of the origin set up circuit, a corresponding reduction of the voltage Vout1 downstream of said circuit, and therefore, via the slope regulation circuit 20, of the driver voltage Vref, is achieved.

In a preferred embodiment, for each lighting transistor TLED, the control circuit comprises a feedback transistor TRA; TRB having the base terminal connected to the collector of a respective lighting transistor, the emitter connected to the base of the transistor TP of the power driver 30 and the collector connected to the base of a voltage control transistor TC. In turn, the collector of said voltage control transistor TC is connected to the base of the transistor of the origin set up circuit 10.

In a preferred embodiment, the feedback transistors TRA; TRB are connected to the respective emitter and collector terminals in parallel to each other, between the base of the transistor TP of the power driver and the base of the voltage control transistor TC.

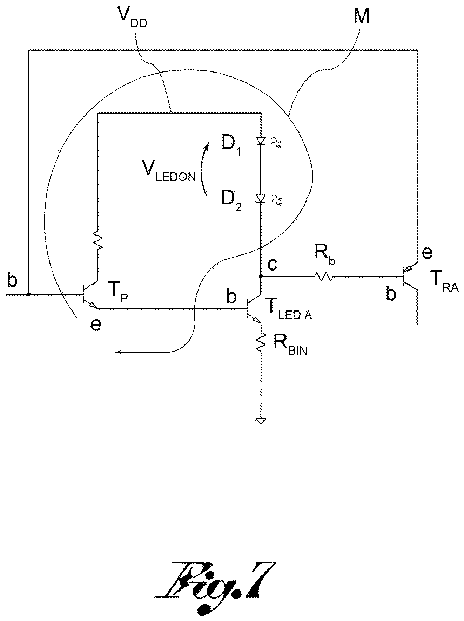

The functioning of the transistor control circuit will now be illustrated in more detail. The transistor control circuit illustrated in figure 7 will be considered, for simplicity's sake relative to a single lighting transistor, for example TLEDA.

The feedback transistor TRA turns on when the emitter-base Veb (TRA) voltage is about 0.7V. Applying the Kirchoff law to the mesh M indicated in figure 7, one therefore has:

$$Vbc(TLEDA) + Vbe(TP) = Veb(TRA) + VRb,$$

where Rb is the base resistance of the feedback transistor TRA, that is
TRA only turns on at: Veb(TRA)+VRb > 0.7 V, which may be re-written as:

$$Vbc(TLEDA) + Vbe(TP) > 0.7 V$$

Since Vbe (TP) is equal to about 0.7 V, and ignoring the negligible voltage drop at the ends of the resistance Rb on the base of the feedback transistor, one has
TRA only turns on if:

$$\mathtt{Vbc(TLEDA)>0.}$$

Consequently, the feedback transistor TRA only turns on when the lighting transistor approaches the saturation zone, that is, when the collector voltage falls below the base voltage.

When the feedback transistor turns on, a collector current begins to flow in this transistor, such current entering the base of the control transistor TC, turning it on. The activation of the control transistor, as said, causes an increase in the voltage drop V1 at the ends of the origin set up circuit 10, and therefore a reduction of the driver voltage Vref. Said driver voltage decreases until the lighting transistor which was in saturation enters the linear zone turning off the feedback transistor TRA.

Returning now to the ILED (VDD) characteristic between the driver current ILED and power supply voltage VDD, it will now be shown how such characteristic may be defined, for the presence of the control circuit 40, as:

$$\mathtt{ILED = (VDD-VLEDON-VDO)*1/RBIN}$$

(first curve r1' in figure 6).

In fact, again with reference to the circuit in figure 7, in the lighting branch which activates the transistor control circuit 40, which is the one relative to the "worst" case, in other words the one which has a higher voltage drop on the VLEDON than the other lighting branches, one has:

- by effect of the feedback of the transistor control circuit 40, VCB cannot be less than zero, that is $VC \geq VB$;
- in the voltage range comprised between VX+VBE and V12, the lighting transistor would tend to go towards saturation, which would entail that VCB would tend to become negative, that is VC<VB.

Both such conditions having to coexist, it happens that VCB settles at around approximately zero volts. If VCB =0, in this range the lighting transistor remains in the linear zone. From this it derives that VCE=VBE=0.7 V.

Consequently, the driver current is:

$$\mathtt{ILED = (VDD-VLEDON-VDO)*1/RBIN}$$

where VDO=VCE=0.7 V, VDO being the voltage which imposes the transistor control circuit 40 as voltage drop on the lighting transistor and which remains constant in the range $Vx+VBE \leq VDD \leq V12$.

Consequently, as the power supply voltage VDD varies, the lighting transistor passes from off to on in the linear zone, thereby functioning in the desired manner to make the driver current ILED independent of the LED characteristics.

It is clear that, if none of the lighting transistors can become saturated, the voltage/current characteristic on the various lighting branches will be equal, the VBE of the transistors being will be very similar, the emitter voltages will consequently be the same, the driver resistances RBIN will be the same, and therefore the driver currents will be the same. Considering again the voltage/current characteristic, one has all the lighting branch curves tending to the "worst", in other words the one with the highest voltage drop on the LEDs. In fact, it is the worst branch which keeps the relative feedback transistor on the longest, limiting the base voltage of all the other lighting transistors.

It is therefore evident how the driver circuit means, comprising the origin set up circuit 10, the slope regulation circuit 20 and the transistor control circuit 40, make the driver currents of the various lighting branches equal, the same driver voltage Vref being applied to all the lighting transistors, for the entire power range of the circuit, that is the curve formed of the first and second curve.

Advantageously, the transistor control circuit also performs a malfunction failure diagnosis for an open circuit in one of the lighting branches.

In the case of open circuit malfunction, the lighting transistor of the branch in malfunction, in the presence of a driver voltage on its base, being unable to make a collector current proportional to the base current flow, lowers its collector current, attempting to go into saturation. But as soon as the collector- base VCB current falls below zero, the transistor control circuit 40 comes into play which, as explained above, does not just cut the driver voltage of the transistor tending to saturation to make it remain in the linear zone, but also the base voltages of all the other lighting transistors.

While in the situation described previously of normal functioning, the increase in the power supply voltage VDD makes a driver current flow through the lighting branches such as to turn on the LEDs, in the case of open circuit malfunction this cannot happen because the transistor of the relative branch cannot ever come out of the limited base voltage Vref. Since such base voltage is the same for all the lighting transistors, the LEDs of the correctly functioning LEDS do not turn on either.

Such malfunction effect of an open circuit LED simulates therefore the effect of a malfunction of a traditional bulb, in that the lighting device, for example the vehicle light, appears completely off. As well as the visual effect the failure to absorb current on all the branches may activate an alarm signal.

It is to be noted that, the minimum base voltage applied to all the lighting transistors is in any case sufficient to permit the lighting transistors to remain in a state of activation. If the LED should resume functioning, all the LED branches may resume normal functioning.

It is to be noted lastly in parallel with the output of the slope regulation circuit a zener diode DZ suitable for protecting the circuit from any surges is connected. Consequently, beyond a predefined power supply voltage, the driver current ILED is no longer proportional to such voltage but becomes constant (third curve r3' in the graph in figure 6.)

With the driver circuit according to the invention, a driver current completely independent of the LED characteristics and constant for all the lighting branches is therefore obtained. It is not therefore necessary to use LEDs with voltage selection, with the evident advantages deriving therefrom.

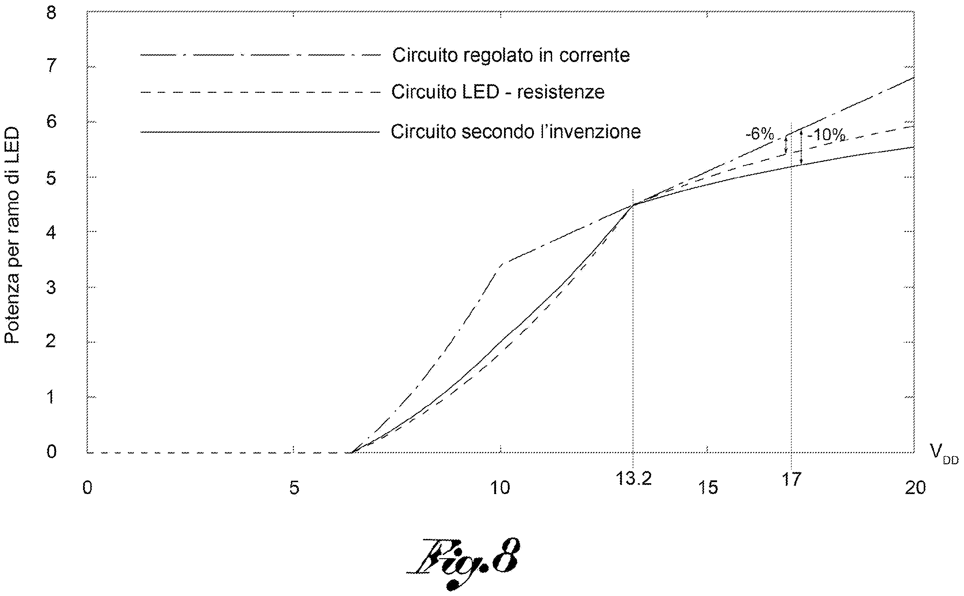

In addition, the driver current being dependent on the power supply voltage VDD, it is possible, for example when the power supply voltage exceeds the nominal value, to apply a PWM modulation so as to dissipate less power than with the stabilised current circuit. The graph in figure 8 shows the power absorption of a lighting circuit in the three cases of a current-regulated circuit (figures 3.4), an LED-resistances circuit (figures 1-2) and the circuit according to the invention. It may be noted that the driver circuit according to the invention makes it possible to reduce the power absorption not just in relation to the current regulated circuit but also in relation to the LED-resistances circuit.

Thank to the origin set up circuit of the second curve r2', the right compromise between maximum absorbed power and drop in luminosity with the increase in power supply voltage can be accurately selected.

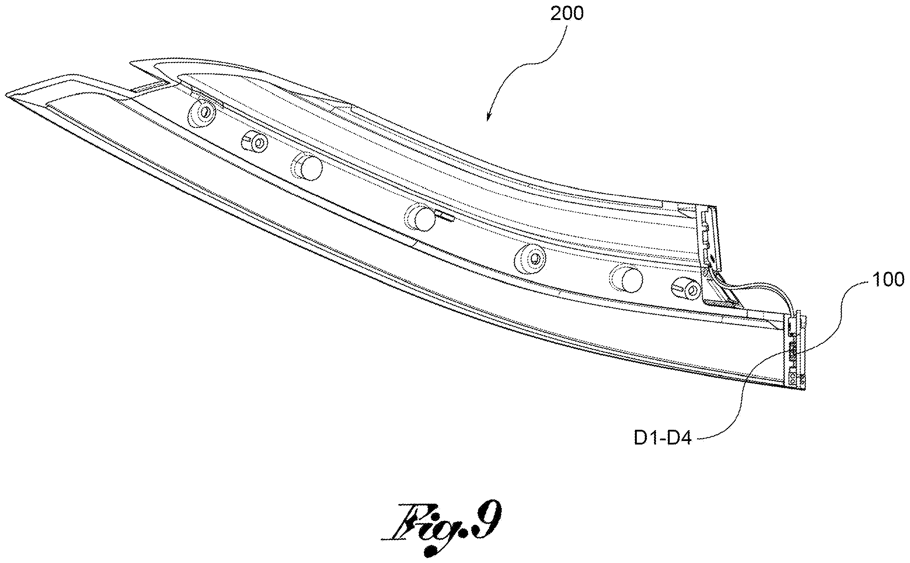

With reference to figure 9, the present invention relates to a vehicle light 200 wherein at least one light of the vehicle light is made with LED light sources driven by the driver circuit described above. The vehicle light 200 may be a front light, rear light or a third brake light of the vehicle, and for example, a rear light may be the sidelight, brake light or rear fog light.

A person skilled in the art may make modifications and variations to the embodiments of the driver circuit according to the invention, replacing elements with others functionally equivalent so as to satisfy contingent requirements while remaining within the scope of protection of the following claims.

For example, the driver circuit means may be implemented by means of software, for example using a micro-controller processor or DSP to achieve the driver voltage as described above.

Lastly, despite the present invention being particularly advantageous in the case of LEDs positioned on several lighting branches connected in parallel, each driven by a respective lighting switching element the driver circuit solution proposed may also be applied to a single lighting branch, in particular comprising an LED matrix, that is to say a plurality of LEDs positioned in strings connected in parallel and driven by the same lighting switching element. In the case of the LED matrix for example, the circuit according to the invention makes it possible to choose the best compromise between dissipated power and luminosity drops for power supply voltages over the nominal value.

In addition, in the driver circuit according to the invention the power dissipated by the active elements, excluding the LEDs, is equally divided between the driver resistances and the transistors of the lighting branches; in the case of a current stabilised circuit rather, the power is almost entirely dissipated by the transistors of the lighting branches. In practical terms, this means that the circuit according to the invention requires fewer lighting transistors (more expensive) and more driver resistances (less expensive).

**Claims**

1. LED driver circuit for powering at least two LED strings, each LED string comprising one or more LEDs (D1,D2; D3,D4) connected to each other in series, the circuit comprising:

  - a positive power supply terminal (1) connectable to the positive pole of a direct voltage power supply generator (Vbat) and a negative terminal (2) connectable to the negative pole of said generator, said positive power supply terminal (1), when connected to the positive pole of the direct voltage power supply generator (Vbat), being at a power supply voltage (VDD);
  - at least two lighting transistors (TLEDA; TLEDB) and at least two respective driver resistances (RBIN), each LED string being connected between said positive power supply terminal (1) and the collector of a respective lighting transistor (TLEADA; TLEDB), the emitter of each lighting transistor (TLEADA; TLEDB) being connected to the negative terminal (2) through the respective driver resistance (RBIN), each lighting transistor being operable to switch at least between an inactive state, in which said transistor prevents the passage of a driver current (ILED) into said LED string, and an active state, in which said transistor works in the linear zone so as to impose a driver current (ILED) through said LED string, said driver current depending on a driver voltage (Vref) applied to the base terminal of said lighting transistor according to the formula

$$ILED=(Vref-VBE)/RBIN,$$

wherein VBE is the base-emitter voltage of the lighting transistor,
the circuit being **characterised by** comprising transistor driver circuit means (10,20,40) and in that the bases of all the lighting transistors are connected to the positive power supply terminal (1) through said transistor driver circuit means (10,20,40) so that the driver voltage (Vref) depends in a substantially linear manner on the power supply voltage (VDD) present on the positive power supply terminal (1) according to the curve

$$Vref = Vx + kVDD$$

where Vx and K are constant parameters,
said transistor driver circuit means (10,20,40) comprising

    - a slope regulation circuit suitable for defining the slope (k) of said curve, and
    - a curve origin set up circuit suitable for defining the origin (Vx) of the curve.

2. LED Driver circuit according to the previous claim, wherein the lighting transistor switches to the active state when the transistor driver voltage assumes a value such as to make said transistor work in the linear zone.

3. LED Driver circuit according to anyone of the previous claims, wherein said slope regulation circuit (20) comprises a dual resistance, Rph and Rp1, voltage divider circuit, so that the slope K = Rp1/(Rp1+ Rph).

4. LED Driver circuit according to any of the previous claims, wherein said slope regulation and origin set up circuits are connected in series to each other, and wherein the slope regulation circuit is placed downstream of the origin set up circuit.

5. LED Driver circuit according to any of the previous claims, further comprising a power driver (30) placed between the transistor driver circuit means and the lighting transistors and suitable to provide said lighting transistors with the current needed for them to function in the active state.

6. LED Driver circuit according to any of the previous claims, wherein said transistor driver circuit means comprise a transistor control circuit (40) suitable to force the lighting transistors to work in the linear zone.

7. LED Driver circuit according to the previous claim, wherein the control means (40) are connected in feedback between the collector terminal of each of the lighting transistors and the origin set up circuit, in such a way that, when the voltage on said collector terminal assumes a value which tends to make the lighting transistor work in the saturation zone, said control circuit acts on said origin set up circuit (10) increasing the voltage drop (V1) across said origin set up circuit.

8. LED Driver circuit according to claim 7, wherein, for each lighting transistor, the transistor control circuit (40) comprises a feedback transistor (TRA; TRB; TRC) having the base terminal connected to the collector of a respective lighting transistor, the emitter connected to the base of the power driver (30) and the collector connected to the base of a voltage control transistor (TC), the collector of which is connected to the origin set up circuit (10).

9. LED Driver circuit according to the previous claim, wherein the feedback transistors are connected to the respective emitter and collector terminals in parallel.

10. LED driver method for powering, by means of a driver circuit, at least two LED strings, each LED string comprising one or more LEDs connected in series to each other, said driver circuit comprising:

- a positive power supply terminal (1) connectable to a positive pole of a direct voltage power supply generator and a negative terminal (2) connectable to the negative pole of said generator, said positive power supply terminal (1), when connected to the positive pole of the direct voltage power supply generator (Vbat), being at a power supply voltage (VDD);
- at least two lighting transistors (TLEDA; TLEDB), and at least two respective driver resistances (RBIN), each LED string being connected between said positive power supply terminal (1) and the collector of the respective lighting transistor (TLEADA; TLEDB), the emitter of each lighting transistor (TLEADA; TLEDB) being connected to to the negative terminal (2) through the respective driver resistance (RBIN), each lighting transistor being operable to switch at least between an inactive state, in which said transistor prevents the passage of a driver current (ILED) into said LED string, and an active state, in which said transistor works in the linear zone so as to impose a driver current (ILED) through said LED string, said driver current depending on a driver voltage (Vref) applied to all the base terminals of said lighting transistors according to the formula

$$ILED = (Vref - VBE)/RBIN,$$

wherein VBE is the base-emitter voltage of the lighting transistor,
the method being **characterised by** generating a driver voltage (Vref) which depends in a substantially linear manner on the power supply voltage (VDD) present on the positive power supply terminal (1) according to the curve

$$Vref = Vx + kVDD$$

where Vx is a constant parameter defined by a curve origin set up circuit, and where
K is a constant parameter defined by a slope regulation circuit.

11. Method according to claim 10, wherein said lighting transistors are forced to remain or to switch to a state of functioning in a linear zone.

12. Method according to the previous claim, comprising the steps of detecting the state of functioning of the lighting transistors, and in response to switching over to the state of functioning in saturation occurring, to reduce the driver voltage so as to return or maintain said lighting transistors in the linear zone.

13. Vehicle light, **characterised by** comprising an LED driver circuit according to any of the claims from 1 to 9.


**Patentansprüche**

1. LED-Treiberschaltung für das Antreiben von mindestens zwei LED-Ketten, wobei jede LED-Kette eine oder mehrere LEDs (D1, D2; D3, D4) umfasst, die miteinander in Reihe geschaltet sind, wobei die Schaltung Folgendes umfasst:

- eine positive Stromversorgungsklemme (1), die an den Pluspol eines Gleichspannungs-Stromgenerators (Vbat) anschließbar ist, und eine negative Klemme (2), die an den Minuspol des Generators anschließbar ist, wobei die positive Stromversorgungsklemme (1), wenn sie an den Pluspol des Gleichspannungs-Stromgenerators (Vbat) angeschlossen ist, bei einer Stromversorgungsspannung (VDD) liegt;
- mindestens zwei Lichttransistoren (TLEDA; TLEDB) und mindestens zwei entsprechende Treiberwiderstände (RBIN), wobei jede LED-Kette zwischen der positiven Stromversorgungsklemme (1) und dem Kollektor eines entsprechenden Lichttransistors (TLEADA; TLEDB) angeschlossen ist, wobei der Emitter jedes Lichttransistors (TLEADA; TLEDB) an die negative Klemme (2) über den entsprechenden Treiberwiderstand (RBIN) angeschlossen ist, wobei jeder Lichttransistor betriebsfähig ist, zumindest zwischen einem inaktiven Zustand, in dem der Transistor das Hindurchfließen eines Treiberstroms (ILED) in die LED-Kette verhindert, und einem aktiven Zustand umzuschalten, in dem der Transistor in dem linearen Bereich arbeitet, um einen Treiberstrom (ILED) durch die LED-Kette aufzubringen, wobei der Treiberstrom von einer Treiberspannung (Vref) abhängt, die an der Basisklemme des Lichttransistors entsprechend der Formel

$$ILED = (Vref - VBE) / RBIN$$

anliegt, wobei VBE die Basis-Emitter-Spannung des Lichttransistors ist, wobei die Schaltung **dadurch gekennzeichnet ist, dass** sie Transistor-Treiberschaltungsmittel (10, 20, 40) umfasst und dadurch, dass die Basen aller Lichttransistoren an die positive Stromversorgungsklemme (1) durch die Transistor-Treiberschaltungsmittel (10, 20, 40) angeschlossen sind, sodass die Treiberspannung (Vref) in einer im Wesentlichen linearen Weise von der Stromversorgungsspannung (VDD) abhängt, die an der positiven Stromversorgungsklemme (1) entsprechend der Kurve

$$Vref = Vx + kVDD$$

vorliegt, wobei Vx und K Konstanten sind, wobei die Transistor-Treiberschaltungsmittel (10, 20, 40) Folgendes umfassen:

- eine Steigungsregulierungsschaltung, die geeignet ist, die Steigung (k) der Kurve zu bestimmen, und
- eine Kurvenursprungseinrichtungsschaltung, die geeignet ist, den Ursprung (Vx) der Kurve zu bestimmen.

2. LED-Treiberschaltung nach dem vorhergehenden Anspruch, wobei der Lichttransistor in den aktiven Zustand umschaltet, wenn die Transistortreiberspannung einen solchen Wert erreicht, um den Transistor zu veranlassen, in dem linearen Bereich zu arbeiten.

3. LED-Treiberschaltung nach einem der vorhergehenden Ansprüche, wobei die Steigungsregulierungsschaltung (20) eine Spannungsteilerschaltung mit doppelten Widerstand, Rph und Rpl, umfasst, sodass die Steigung K = Rpl / (Rpl + Rph) ist.

4. LED-Treiberschaltung nach einem der vorhergehenden Ansprüche, wobei die Steigungsregulierungs- und Ursprungseinrichtungsschaltungen miteinander in Reihe geschaltet sind, und wobei die Steigungsregulierungsschaltung der Ursprungseinrichtungsschaltung nachgeschaltet ist.

5. LED-Treiberschaltung nach einem der vorhergehenden Ansprüche, überdies umfassend einen Leistungstreiber (30), der zwischen den Transistor-Treiberschaltungsmitteln und den Lichttransistoren platziert und geeignet ist, den Lichttransistoren den für sie erforderlichen Strom bereitzustellen, um in dem aktiven Zustand zu funktionieren.

6. LED-Treiberschaltung nach einem der vorhergehenden Ansprüche, wobei die Transistor-Treiberschaltungsmittel eine Transistorsteuer- bzw. -regelschaltung (40) umfassen, die geeignet ist, die Lichttransistoren zu zwingen, in dem linearen Bereich zu arbeiten.

7. LED-Treiberschaltung nach dem vorhergehenden Anspruch, wobei die Steuer- bzw. Regelmittel (40) rückkoppelnd zwischen der Kollektorklemme jedes Lichttransistors und der Ursprungseinrichtungsschaltung angeschlossen sind, auf eine solche Weise, dass, wenn die Spannung an der Kollektorklemme einen Wert erreicht, der üblicherweise den Lichttransistor veranlasst, in dem Sättigungsbereich zu arbeiten, die Steuer- bzw. Regelschaltung auf die Ursprungseinrichtungsschaltung (10) einwirkt, wobei der Spannungsunterschied (V1) in der Ursprungseinrichtungsschaltung zunimmt.

8. LED-Treiberschaltung nach Anspruch 7, wobei die Transistorsteuer- bzw. -regelschaltung (40) für jeden Lichttransistor einen Rückkopplungstransistor (TRA; TRB; TRC) umfasst, wobei die Basisklemme an den Kollektor eines entsprechenden Lichttransistors angeschlossen ist, der Emitter an die Basis des Leistungstreibers (30) angeschlossen ist und der Kollektor an die Basis eines Spannungssteuer- bzw. -regeltransistors (TC) angeschlossen ist, wobei dessen Kollektor an die Ursprungseinrichtungsschaltung (10) angeschlossen ist.

9. LED-Treiberschaltung nach dem vorhergehenden Anspruch, wobei die Rückkopplungstransistoren zu den entsprechenden Emitter- und Kollektorklemmen parallel geschaltet sind.

10. LED-Treiberverfahren zum Antreiben von mindestens zwei LED-Ketten mittels einer Treiberschaltung, wobei jede LED-Kette eine oder mehrere LEDs umfasst, die miteinander in Reihe geschaltet sind, wobei die Treiberschaltung Folgendes umfasst:

- eine positive Stromversorgungsklemme (1), die an den Pluspol eines Gleichspannungs-Stromgenerators anschließbar ist, und eine negative Klemme (2), die an den Minuspol des Generators anschließbar ist, wobei die positive Stromversorgungsklemme (1), wenn sie an den Pluspol des Gleichspannungs-Stromgenerators (Vbat) angeschlossen ist, bei einer Stromversorgungsspannung (VDD) liegt;
- mindestens zwei Lichttransistoren (TLEDA; TLEDB) und mindestens zwei entsprechende Treiberwiderstände (RBIN), wobei jede LED-Kette zwischen der positiven Stromversorgungsklemme (1) und dem Kollektor des entsprechenden Lichttransistors (TLEADA; TLEDB) angeschlossen ist, wobei der Emitter jedes Lichttransistors (TLEADA; TLEDB) an die negative Klemme (2) über den entsprechenden Treiberwiderstand (RBIN) angeschlossen ist, wobei jeder Lichttransistor betriebsfähig ist, zumindest zwischen einem inaktiven Zustand, in dem der Transistor das Hindurchfließen eines Treiberstroms (ILED) in die LED-Kette verhindert, und einem aktiven Zustand umzuschalten, in dem der Transistor in dem linearen Bereich arbeitet, um einen Treiberstrom (ILED) durch die LED-Kette aufzubringen, wobei der Treiberstrom von einer Treiberspannung (Vref) abhängt, die an allen Basisklemmen der Lichttransistoren entsprechend der Formel

$$ILED = (Vref - VBE) / RBIN$$

anliegt, wobei VBE die Basis-Emitter-Spannung des Lichttransistors ist, wobei das Verfahren **gekennzeichnet ist durch** Erzeugen einer Treiberspannung (Vref), die in einer im Wesentlichen linearen Weise von der Stromversorgungsspannung (VDD) abhängt, die an der positiven Stromversorgungsklemme (1) entsprechend der Kurve

$$Vref = Vx + kVDD$$

vorliegt, wobei Vx eine Konstante ist, die durch eine Kurvenursprungseinrichtungsschaltung bestimmt ist, und wobei
K eine Konstante ist, die durch eine Steigungsregulierungsschaltung bestimmt ist.

**11.** Verfahren nach Anspruch 10, wobei die Lichttransistoren gezwungen werden, in einem Zustand des Funktionierens in einem linearen Bereich zu verbleiben oder in ihn umzuschalten.

**12.** Verfahren nach dem vorhergehenden Anspruch, umfassend die Schritte des Erfassens des Zustands des Funktionierens der Lichttransistoren und in Ansprechen auf das Auftreten des Umschaltens in den Zustand des Funktionierens in Sättigung, Reduzieren der Treiberspannung, um die Lichttransistoren in den linearen Bereich zurückzubringen oder dort beizubehalten.

**13.** Fahrzeugleuchte, **dadurch gekennzeichnet, dass** sie eine LED-Treiberschaltung nach einem der Ansprüche 1 bis 9 umfasst.

## Revendications

**1.** Circuit pilote pour DEL pour alimenter au moins deux lignes de DEL, chaque ligne de DEL comprenant une ou davantage de DEL (D1, D2 ; D3, D4) connectées entre elles en série, le circuit comprenant :

- une borne positive (1) d'alimentation adaptée pour pouvoir être connectée au pôle positif d'un générateur d'alimentation en tension continue (Vbat) et une borne négative (2) adaptée pour pouvoir être connectée au pôle négatif dudit générateur, la borne positive (1) d'alimentation étant à une tension d'alimentation (VDD), lorsqu'elle est connectée au pôle positif du générateur d'alimentation en tension continue (Vbat),
- au moins deux transistors émettant de la lumière (TLEDA ; TLEDB) et au moins deux résistances pilotes (RBIN) respectives, chaque ligne de DEL étant connectée entre la borne positive (1) d'alimentation et le collecteur d'un transistor émettant de la lumière (TLEDA ; TLEDB) respectif, l'émetteur de chaque transistor émettant de la lumière (TLEDA ; TLEDB) étant connecté à la borne négative (2) par la résistance pilote (RBIN) respective, chaque transistor émettant de la lumière étant adapté pour pouvoir être actionné pour commuter au moins entre un état inactif dans lequel le transistor empêche le passage d'un courant pilote (ILED) vers la ligne de DEL, et un état actif dans lequel le transistor fonctionne dans la zone linéaire afin d'imposer un courant pilote (ILED) passant par la ligne de DEL, le courant pilote étant fonction d'une tension pilote (Vref) appliquée à la borne de base du transistor émettant de la lumière selon la formule

$$ILED = (Vref - VBE) / RBIN,$$

où VBE est la tension base-émetteur du transistor émettant de la lumière,

le circuit étant **caractérisé par** le fait de comprendre des moyens de circuits pilotes pour transistor (10, 20, 40) et en ce que les bases de tous les transistors émettant de la lumière sont connectées à la borne positive (1) d'alimentation par les moyens de circuits pilotes pour transistor (10, 20, 40), si bien que la tension pilote (Vref) dépende d'une manière essentiellement linéaire de la tension d'alimentation (VDD) présente à la borne positive (1) d'alimentation selon la courbe

$$Vref = Vx + kVDD,$$

où Vx et k sont des paramètres constants,
les moyens de circuits pilotes pour transistor (10, 20, 40) comprenant

- un circuit de régulation de pente adapté pour définir la pente (k) de la courbe et
- un circuit pour établir le point d'origine de courbe pour déterminer l'origine (Vx) de la courbe.

2. Circuit pilote pour DEL selon la revendication précédente, **caractérisé en ce que** le transistor émettant de la lumière commute vers l'état actif lorsque la tension pilote de transistor atteint une valeur telle que le transistor soit fait fonctionner dans la zone linéaire.

3. Circuit pilote pour DEL selon l'une quelconque des revendications précédentes, **caractérisé en ce que** le circuit de régulation de pente (20) comprend un circuit de division de tension à double résistance, Rph et Rpl, si bien que la pente soit K = Rpl / (Rpl + Rph).

4. Circuit pilote pour DEL selon l'une quelconque des revendications précédentes, **caractérisé en ce que** les circuits de régulation de pente et de point d'origine sont connectés les uns aux autres en série et **en ce que** le circuit de régulation de pente est disposé en aval du circuit pour établir le point d'origine.

5. Circuit pilote pour DEL selon l'une quelconque des revendications précédentes, comprenant en outre un pilote de puissance (30) disposé entre les moyens de circuits pilotes pour transistor et les transistors émettant de la lumière et adapté pour fournir aux transistors émettant de la lumière le courant nécessaire pour eux pour fonctionner dans l'état actif.

6. Circuit pilote pour DEL selon l'une quelconque des revendications précédentes, **caractérisé en ce que** les moyens de circuits pilotes pour transistor comprennent un circuit de commande de transistor (40) adapté pour forcer les transistors émettant de la lumière de fonctionner dans la zone linéaire.

7. Circuit pilote pour DEL selon la revendication précédente, **caractérisé en ce que** les moyens de commande (40) sont connectés en boucle entre la borne de collecteur de chacun des transistors émettant de la lumière et le circuit pour établir le point d'origine de façon telle que, lorsque la tension à la borne de collecteur atteint une valeur qui tend à faire fonctionner le transistor émettant de la lumière dans la zone de saturation, le circuit de commande agit sur le circuit pour établir le point d'origine (10), augmentant la chute de tension (V1) sur ledit circuit d'établissement.

8. Circuit pilote pour DEL selon la revendication 7, **caractérisé en ce que**, pour chaque transistor émettant de la lumière, le circuit de commande de transistor (40) comprend un transistor de rétroaction (TRA ; TRB ; TRC) dont la borne de base est connectée au collecteur d'un transistor émettant de la lumière respectif, l'émetteur est connecté à la base du pilote de puissance (30) et le collecteur est connecté à la base d'un transistor de réglage de tension (TC) dont le collecteur est connecté au circuit pour établir le point d'origine (10).

**9.** Circuit pilote pour DEL selon la revendication précédente, **caractérisé en ce que** les transistors de rétroaction sont connectés en parallèle aux bornes d'émetteur et de collecteur respectives.

**10.** Procédé de commande pour DEL pour alimenter, à l'aide d'un circuit pilote, au moins deux lignes de DEL, chaque ligne de DEL comprenant une ou davantage de DEL connectées entre elles en série, le circuit pilote comprenant :

- une borne positive (1) d'alimentation adaptée pour pouvoir être connectée à un pôle positif d'un générateur d'alimentation en tension continue (Vbat) et une borne négative (2) adaptée pour pouvoir être connectée au pôle négatif dudit générateur, la borne positive (1) d'alimentation étant à une tension d'alimentation (VDD), lorsqu'elle est connectée au pôle positif du générateur d'alimentation en tension continue (Vbat),
- au moins deux transistors émettant de la lumière (TLEDA ; TLEDB) et au moins deux résistances pilotes (RBIN) respectives, chaque ligne de DEL étant connectée entre la borne positive (1) d'alimentation et le collecteur du transistor émettant de la lumière (TLEDA ; TLEDB) respectif, l'émetteur de chaque transistor émettant de la lumière (TLEDA ; TLEDB) étant connecté à la borne négative (2) par la résistance pilote (RBIN) respective, chaque transistor émettant de la lumière étant adapté pour pouvoir être actionné pour commuter au moins entre un état inactif dans lequel le transistor empêche le passage d'un courant pilote (ILED) vers la ligne de DEL, et un état actif dans lequel le transistor fonctionne dans la zone linéaire afin d'imposer un courant pilote (ILED) passant par la ligne de DEL, le courant pilote étant fonction d'une tension pilote (Vref) appliquée à toutes les bornes de base des transistors émettant de la lumière selon la formule

$$ILED = (Vref - VBE) / RBIN,$$

où VBE est la tension base-émetteur du transistor émettant de la lumière,

le procédé étant **caractérisé par** le fait d'engendrer une tension pilote (Vref) qui dépend d'une manière essentiellement linéaire de la tension d'alimentation (VDD) présente à la borne positive (1) d'alimentation selon la courbe

$$Vref = Vx + kVDD,$$

où Vx est un paramètre constant défini par un circuit pour établir le point d'origine de courbe et où K est un paramètre constant défini par un circuit de régulation de pente.

**11.** Procédé selon la revendication 10, **caractérisé en ce que** les transistors émettant de la lumière sont forcés à rester dans ou à commuter vers un état de fonctionnement dans une zone linéaire.

**12.** Procédé selon la revendication précédente, comprenant les étapes de détecter l'état de fonctionnement des transistors émettant de la lumière et, en réponse à une commutation vers l'état de fonctionnement en saturation intervenante, de réduire la tension pilote de façon à faire retourner ou à maintenir les transistors émettant de la lumière dans la zone linéaire.

**13.** Feu de véhicule, **caractérisé par** le fait de comprendre un circuit pilote pour DEL selon l'une quelconque des revendications 1 à 9.

Fig.2

Fig.1

Fig.3

Fig.4

Fig.5

EP 2 749 132 B1

*Fig.6*

EP 2 749 132 B1

*Fig.7*

*Fig.8*

EP 2 749 132 B1

Fig.9

20

**EP 2 749 132 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011068700 A1